# EUROPEAN PATENT APPLICATION

(11) **EP 0 863 563 A1**
(43) Date of publication of application: **09.09.1998**
(21) Application number: 97670001.3
(22) Date of filing: 03.03.1997
(51) Int. Cl.: H01M 10/04

(54) **Storage battery adapted to the supply of power to independent electrical circuits**

(71) Applicant: Acumuladores Autosil, S.A., 2780 Oeiras (PT)
(72) Inventor: Sena Da Silva, Pedro Manuel Osorio, 2780 Oeiras (PT); Monteiro De Azevedo, Fernando Antonio, 2780 Oeiras (PT)
(74) Representative: Dinis de Carvalho, José Eduardo

(57) **Abstract**

A storage battery is described with a container divided into two or more cells, and outlets for electrical connections in the cover of the container. Two or more elements with electrodes and electrical separators, and an electrolyte completing the electrochemical set of accumulators, are placed in each cell. Each element of each cell is connected in series with the corresponding element of adjacent cells. Each one of the connections in series of these elements may supply electrical power to an independent external circuit, simultaneously or at different times. Since there are two or more sets of anodes in each cell, connected in different series, it is possible to optimise the electrical output of each set by means of an adequate conception of the design and specifications of the active components of these sets.

The number of cells depends on the envisaged nominal voltage of the battery to be built, and is a multiple of the voltage of each element.

Applicable particularly in the motorcar industry.

## Description

### Technical Situation:

Electrical storage batteries are designed and built nowadays to satisfy separate demands for electric power which may occur simultaneously. For example, in motorcars with engines of internal combustion, batteries, in this case called starting batteries, are used, as the name suggests, to operate the starting motor of the internal combustion engine, and also to supply electrical power to other units and equipment of the vehicle such as the ignition, the equipment of the management of the engine, the braking system, the safety equipment, internal and external lighting, demisting of the rear window, clock, radios, alarm systems, etc.

In the current state of the technique, a starting battery is designed to be able to supply the various types of electrical consumption; high currents of a very short duration during the start, or lower currents of variable durations and intensities, according to the consumption of the functions activated. In this case, the performance of the battery cannot be optimal on only one mode of operation, and a solution of compromise in the design of active components is adopted to be able to meet the supply of high currents at the time of starting the engine, and of lower currents to supply other uses of lesser energy requirements. Moreover, the deficiencies in the supply of power to recharge the battery and the excesses of consumption, such as the illumination switched on with the engine not operating, may lead to situations of flattening the battery, which will not be able to supply electrical power to start the engine.

To solve this problem, the usage of two batteries has been adopted until today, in separate modules or in one single module, being one of these batteries designed to supply only high currents during the start of the engine, and the other designed to meet the demands of all the other user systems of the vehicle. A more or less sophisticated system of management of energy controls the recharging and the operations of each battery.

However the invention described intends to improve in some way the possibility of optimising the performance of the battery according to its usage. and also to resolve the occurrence of an internal or external breakdown.

The design proposed in this invention enables the operation of the accumulator in several circuits, with separate operating systems and the optimisation of the performance of the components dedicated to each circuit by means of methods known to the pratictioners the technology involved.

### SUMMARY OF THE INVENTION

The storage batteries of the conventional lead-sulphuric acid technology generally consist of alternating positive and negative electrodes, electrically isolated from one another by separators of a porous isolating material.

The positive electrodes or anodes of an element of 2 volts are associated in parallel by means of electrical connections, and the same happening to the negative anodes. The number and characteristics of the electrodes depend on the performance envisaged for this accumulator, on the operating mode and on the restrictions to the dimensions of the battery to be built. The element thus created is placed in a suitable container, simple or with several cells, where the positive anodes, the separators and the negative anodes are placed in contact with an electrolyte based on diluted sulphuric acid, and in a quantity depending upon the design of the battery and on the operating technology chosen.

A battery of voltage higher than 2 volts is built by connecting simple elements in series. This association may be made in one single container of multiple cavities or cells, as in the case of 6 and 12 volts batteries for motorcars, or by connecting in series separate elements.

The invention now described is different in its construction by including in the same cell 2 or more elements designed to operate in independent circuits. The battery is thus made up by the association of multiple elements in separate series.

A possible simple graphic representation of a conventional battery of 12 volts is as follows: 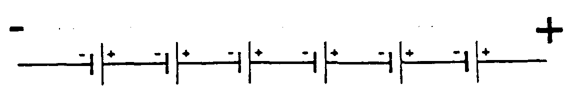 A possible simple graphic representation of a batten of 12 volts and two circuits would be: 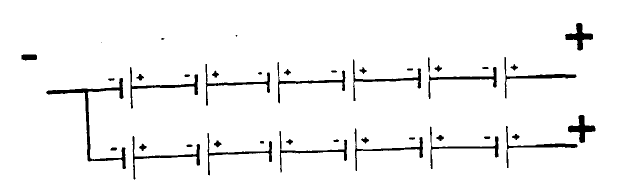 or if without a common terminal: 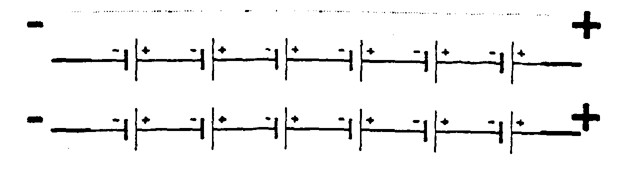 The battery proposed for two circuits is not subject to limitations, and the number of circuits may be increased according to the usage envisaged and according to the constraints of space in each cell. The number of cells will be a multiple of the voltage of one cell in order to reach the desired nominal voltage.

Moreover, operations can be extended to other electrochemical systems.

An example of how to make use of the invention will be described below in detail, with reference to the attached drawings in which the figures represent the following:
- Figure 1, the components of a multiple element, in this case double
- Figure 2, a view from above of a battery of 12 volts and two circuits
- Figure 3, a double element corresponding to element 1 of Fig 2
- Figure 4, a double element corresponding to element 2 of Fig 2
- Figure 5, a double element corresponding to element 6 of Fig 2
- Figure 6, the section of a battery which could be built with the elements described in Figs 3,4 and 5, with the layout shown in Fig 2.

### Detailed description of the invention

To simplify the explanation, a battery designed to work with two circuits relatively independent is described.

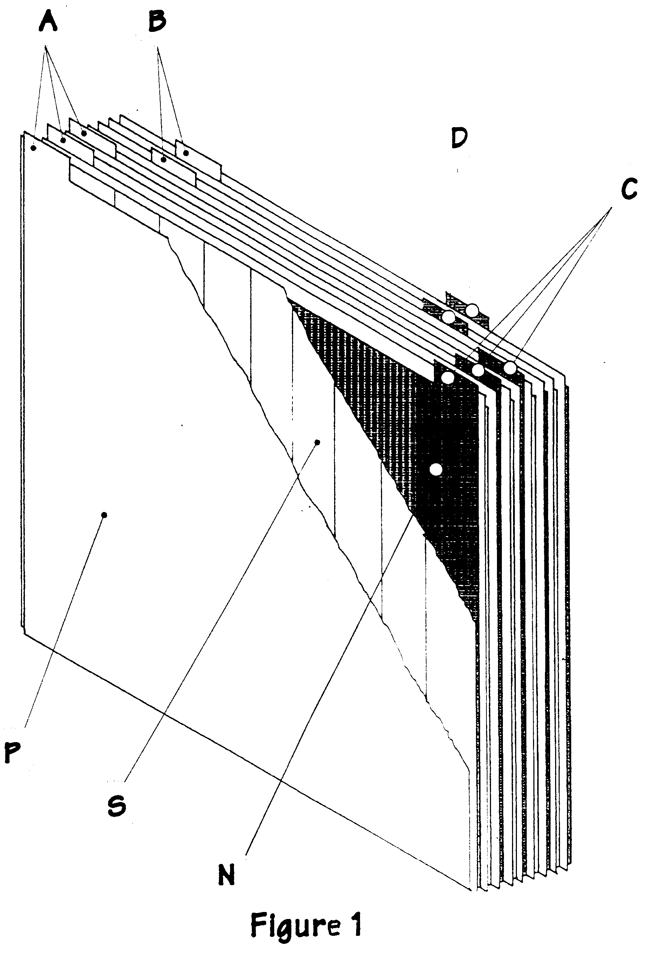

As shown in Fig 1, the element is made up of a succession of positive electrodes, separators of porous isolating material, and negative electrodes. For illustration purposes, a section of positive electrode, marked with (P), is shown. together with a separator (S) and a negative electrode (N).

The figure shows the electrodes of the 1st part of the dual element and the connection terminals marked with A and B, respectively for the positive and negative electrodes, and the electrodes of the other part of the dual element marked C and D, respectively for the positive and negative electrodes.

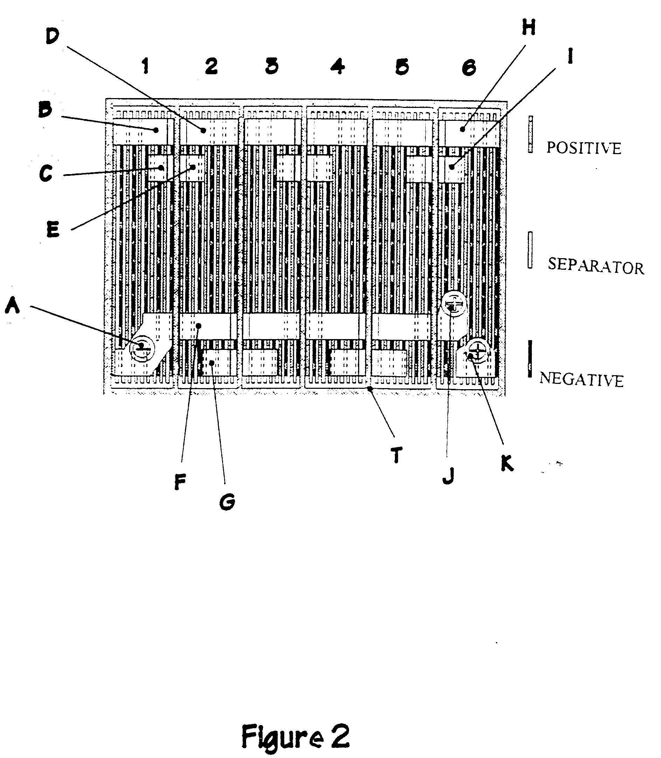

In Fig 2, showing a view from the top of a battery of 12 volts and two circuits, the order of the dual elements is marked with numbers from 1 to 6. The letter A identifies the common terminal of the two circuits. For the simplicity of the description to follow, a negative polarity is given to this outlet terminal. This terminal connects electrically the negative electrodes of the two circuits of the first element, and works as the external outlet of the common point of the battery of two circuits.

The connection of the positive electrodes of the element of the first circuit is marked with the letter B.

The connection of the positive electrodes of the element of the second circuit is market with the letter C.

These element are in a cell of the container represented in the drawing by the letter T. The cell is separated from the other calls of the container, without any communication of the electrolyte between adjacent cells.

Letters D and E indicate the connections of the negative electrodes of the element number 2, respectively to circuits 1 and 2. Letters F and G indicate the connections of the positive electrodes, respectively of the elements of circuits 2 and 1.

By using techniques appropriate to the type of battery being built, which are generally known to those associated with the technology of batteries, the elements described are connected in series, electrically and mechanically joining the connections B with D, and C with E. The connections F and G are for the purpose of joining with the respective negative electrodes of the element of cell number 3.

To build a battery of 12 volts for two separate circuits, 6 dual elements are required, connected in sequence in the manner described for the dual elements 1 and 2.

The connections of the negative electrodes of the element number 6, respectively to circuits 1 and 2, are marked with letters H and I. Letters J and K indicate the connections of the positive electrodes of the elements of circuits 2 and 1 respectively. These connections are joined to the outlet terminals of the battery and, according to the usual practice, with positive polarity.

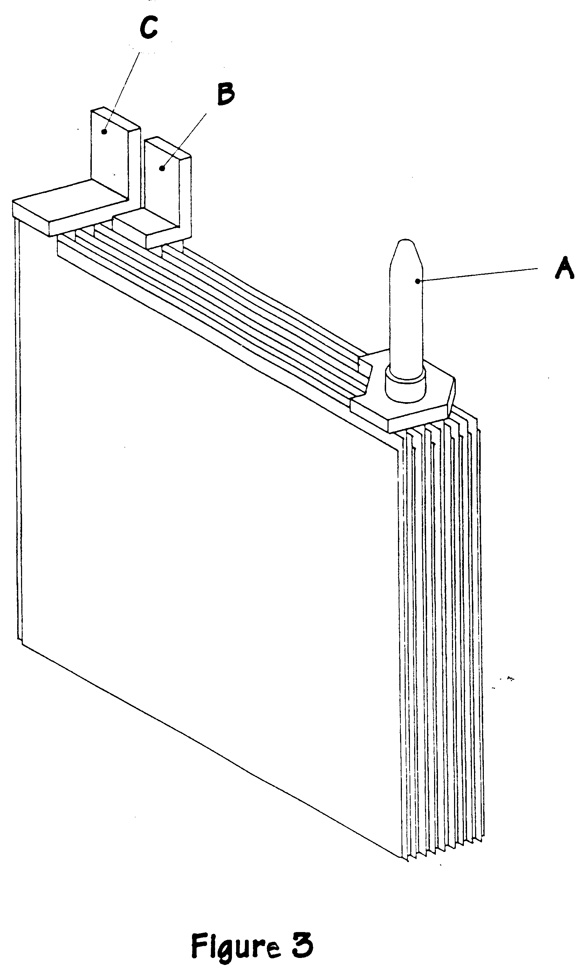

Fig 3, indicated by the letter A, shows the common terminal of the two circuits of the dual element corresponding to the element 1 of Fig 2. According to the attribution of negative polarity to this terminal, this connection links electrically all the negative electrodes of the two circuits of the first element, and operates as an external outlet of the common point of the battery of two circuits.

Letters B and C indicate the connection of the positive electrodes of each part of the dual element and, in this case, respectively of the circuits 1 and 2, to separate.

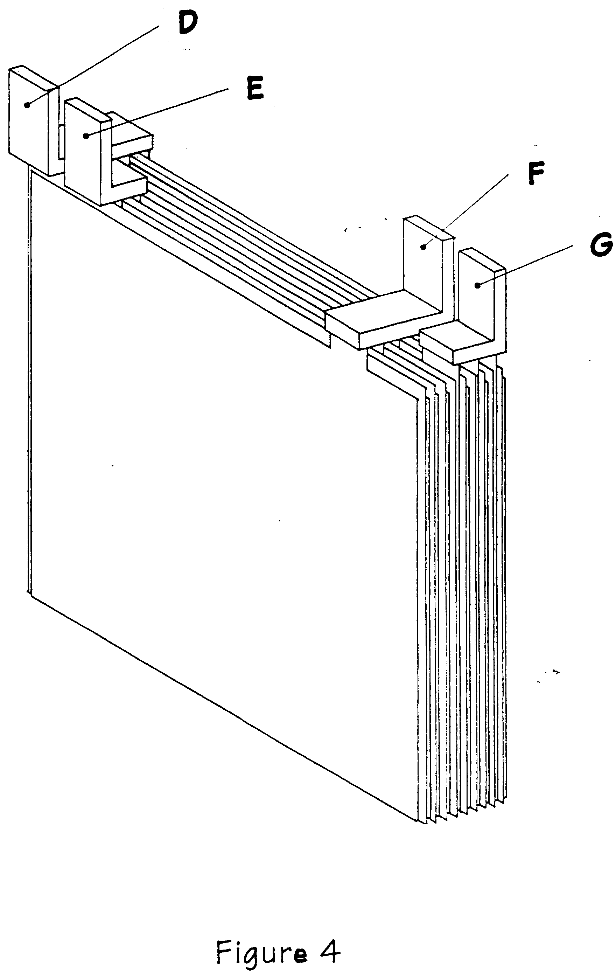

Fig 4 shows the element marked 2 in Fig 2, and with letters D and E, the connections of the negative electrodes of the element number 2 and of circuits 1 and 2 respectively. Letters F and G indicate the connections of respectively the positive electrodes of the elements of circuits 2 and 1.

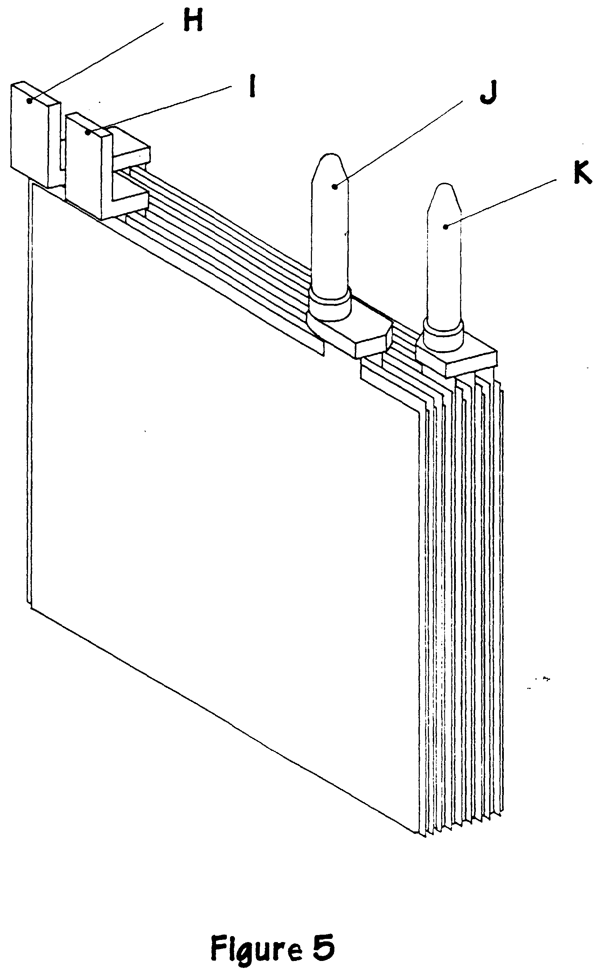

Fig 5 shows the element placed in the last cell of the container marked T in Fig 2, and identified in that figure as element number 6. Letters H and I indicate the connections of the negative electrode of element number 6, and respectively of circuits 1 and 2. These connections are used to join in series with the dual element previously indentified with number 5 in Fig 2. Letters J and K indicate the connections of the positive electrodes, respectively of the elements of circuits 2 and 1. These connections work as outlet terminals for the battery and, as previously mentioned, with a positive polarity, according to the normal practice.

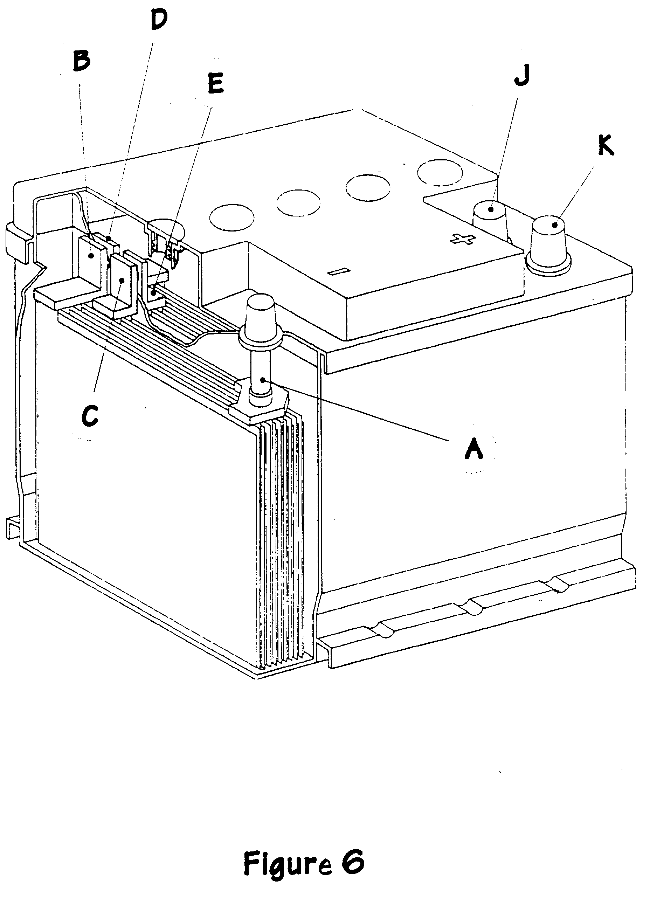

The section of a battery that could be built as previously indicated, is shown in Fig 6.

This figure also indicates by letters A, B and C the components equivalent to those marked by the same letters in Figures 2 and 3. Letters D and E mark the components equivalent to those indicated with the same letters in Figure 2 and 4. Letters J and K mark the components equivalent to those indicated by the same letters in Figures 2 and 5.

The electrochemical aspects of the invention operate identically to those of a battery of simple elements, under the current state of the technology.

## Claims

1. Storage battery with one container divided into cells where sets of electrodes are placed together with separators of isolating material, permeable to the electrolyte, which completes the electrochemical connection between the electrodes, characterised by the inclusion in each cell (1, 2, 3, 4, 5, 6) of one or more elements designed to operate in independent circuits (A - J, A - K), enabling the simultaneous or separate supply of electrical power to independent circuits.

2. A battery built according to claim number 1, characterised by the optimisation of the electrical performance of each part of the multiple element, in such a way as to enable the efficient supply of power to independent electrical circuits of different electrical requirements.

3. A battery according to claim number 1, characterised by enabling the simultaneous or separate supply of electrical power to two or more independent circuits, depending on the number of elements placed in each cell, and separated by connections in series throughout these cells.

4. A storage battery according to claim number 1, characterised by a variable number of cells, ranging between one and the number necessary to obtain the envisaged nominal voltage of the battery.
